# EUROPEAN PATENT SPECIFICATION

(11) **EP 3 123 277 B1**
(45) Date of publication and mention of the grant of the patent: **22.05.2019**
(21) Application number: 14887317.7
(22) Date of filing: 28.03.2014
(51) Int. Cl.: G06F 3/01, G06F 3/041, G06F 3/03, G06F 1/32, G06F 1/16

(54) **COMPUTING DEVICE**
RECHNERVORRICHTUNG
DISPOSITIF INFORMATIQUE

(43) Date of publication of application: 01.02.2017
(73) Proprietor: Hewlett-Packard Development Company, L.P., Spring TX 77389 (US)
(72) Inventor: LEE, Chien-Kuo, Taipei 11568 (TW)
(74) Representative: Stöckeler, Ferdinand
(86) International application number: PCT/US2014/032194
(87) International publication number: WO 2015/147863

(56) References cited:
- EP-A1- 2 624 116
- US-A1- 2009 251 406
- US-A1- 2010 141 603
- US-A1- 2010 245 289
- US-A1- 2011 002 096
- US-A1- 2012 315 847
- US-A1- 2013 120 265
- US-A1- 2014 027 606
- US-A1- 2014 055 370

## Description

### BACKGROUND

Computing devices such as laptop computers, desktop computers and tablet computers, often have a touch sensitive screen ('touch screen' or 'touch display') which can receive user input. Many such computing devices also have a separate input device, such as a physical keyboard and/or a trackball, touchpad or mouse.

US 2014/055370 A1 discloses a notebook PC comprising a bottom case comprising a keyboard, a touchpad or other cursor control devices and a first and a second palm rest areas having a first sensor and a second sensor, i.e. proximity optical sensors, respectively, for detecting a presence of a body part of a user such as a left and right hands of the user; a display casing comprising a touchscreen coupled to the bottom case via hinge portions. It further describes a process which includes the steps of enabling the first and the second sensors at the first and second palm rest areas to detect a presence of body parts, disabling the keyboard if neither the first sensor nor the second sensor detects the presence of the first body part or the second body part of the user and enabling the touch screen so that the user can still use the touch screen to input data in order to avoid accidental press of some keys in the keyboard when users try to touch the touch screen to perform some touch.

US 2010/245289 A1 discloses an apparatus for optical proximity sensing and touch input control. A base member includes a variety of different types of touch input devices. For example, a touch screen is configured to feature a series of areas corresponding to push buttons. Touch screen is configured as a keyboard device. The device of document US 2010/245289 A1 fails to disclose a base member different from a display member.

US 2009/251406 A1 discloses a system for selective activation and deactivation of an information handling system input/output device. The teaching of US 2009/251406 A1 is based on detecting a magnet indicator using a Hall effect detector.

US 2010/141603 discloses a method to reject accidental contact on a touch pad.

### BRIEF DESCRIPTION OF THE DRAWINGS

Examples of the disclosure will now be described, by way of nonlimiting example only, with reference to the accompanying drawings, in which:
Figure 1 is a perspective view of an example of a computing device according to the present disclosure;
Figure 2 is a perspective view of an example of a computing device according to the present disclosure;
Figure 3 is a method diagram for a computing device according to the present disclosure;
Figure 4 is a perspective view of an example showing a computing device and virtual wall according to the present disclosure;
Figure 5 is a side view of an example showing a computing device and virtual wall according to the present disclosure; and
Figure 6 is a block diagram of a computing device according to the present disclosure.

### DETAILED DESCRIPTION

The present invention is defined by the independent claim. The dependent claims define the preferred embodiments. These and other embodiments are further detailed below. The scope of the invention is defined by the claims.

Touch screens provide a convenient and intuitive way for users to interact with a computer device. A user is able to select user interface objects by tapping the touch screen and/or performing other gestures to select items or perform certain actions. Many popular operating systems are programmed to accept input via touch gestures on a touch screen.

Using the touch screen for input is not always convenient, especially for tasks such as typing large amounts of text. Therefore, computer devices with touch displays often have an additional input device, such as a physical keyboard, mouse, touchpad or trackball etc.

When interacting with a touch display screen a user has to lift the arm above a keyboard, or other input device, to touch the screen. The present disclosure proposes a sensor and a controller to adjust input sensitivity of the input device when the sensor detects an object, such as a hand of a user, close to the display. In this way if a user gets tired and rests his or her arm or wrist on the keyboard or other input device, they can do so safely without accidentally inputting signals to the computer device. This may help to alleviate the phenomena known as "gorilla arm" which refers to the fatigue some users encounter when interacting continuously with a touch display over a prolonged period.

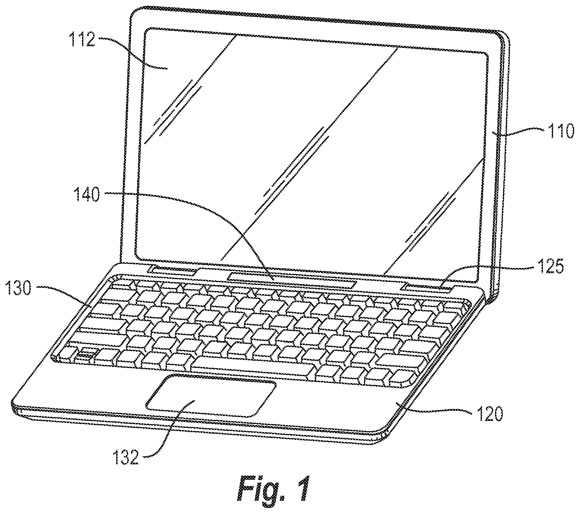

Figure 1 shows an example computer device 100. The device includes a display member 110 connected to a base 120. The display member may be connected to the base by any way which allows signals from the base to be received by the display member. For example there may be a wired or wireless connection. In addition, the display member may be mechanically attached to the base. Generally the mechanical connection will be such that the display member upwardly at an angle relative to the base, for instance the display member is rotatably attached to the base by a hinge or otherwise, or may fit into a slot in the base or have a releasable attachment to the base.

The display member 110 includes a screen 112 for displaying images generated by the computer device. The screen 112 is a touch sensitive screen (commonly known as a 'touch display').

The base member 120 includes a keyboard 130 and a trackball or touchpad 132, which are examples of input devices. In other examples the base member 120 may have only one input device or more than two input devices. In the following the keyboard 130 will be referred to as 'the input device' for ease of reference. However, it is to be understood that in other examples 'the input device' may be a touchpad, trackball or other type of input device on the base.

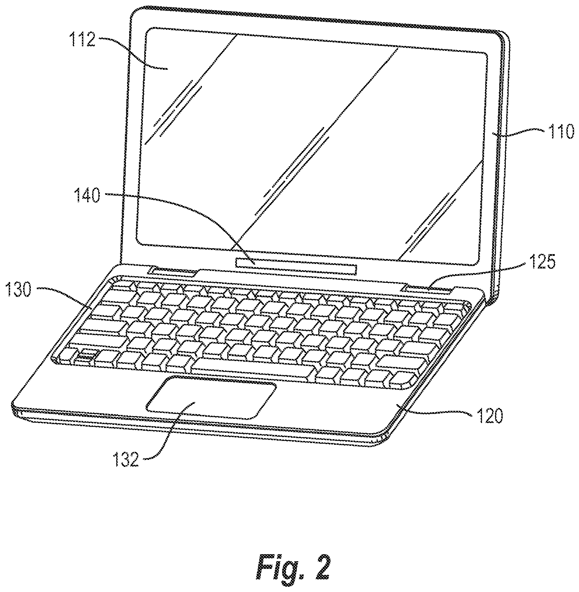

A sensor 140 is arranged to detect presence and movement of an external object, for instance the external object may be a body part of a user, such as a user's hand. The sensor 140 may for example be an optical sensor and in some examples may be a 3D motion sensor. The sensor may be situated on the base member 120 of the computing device. In the example shown in Figure 1 the sensor is located on the base member 120 between the input device 130 and a junction 125 of the base with the display member. In another example, shown in Figure 2 which is otherwise the same as Figure 1 , the sensor 140 may be located on the display member 110.

There are various considerations when considering where to locate the sensor 140, including the best position for detecting movement of a user's hand towards the display member, the size of the sensor and space available and aesthetic considerations. The base member 120 may in some cases have more room than the frame surrounding the display member, which may allow for a larger or more sophisticated sensor.

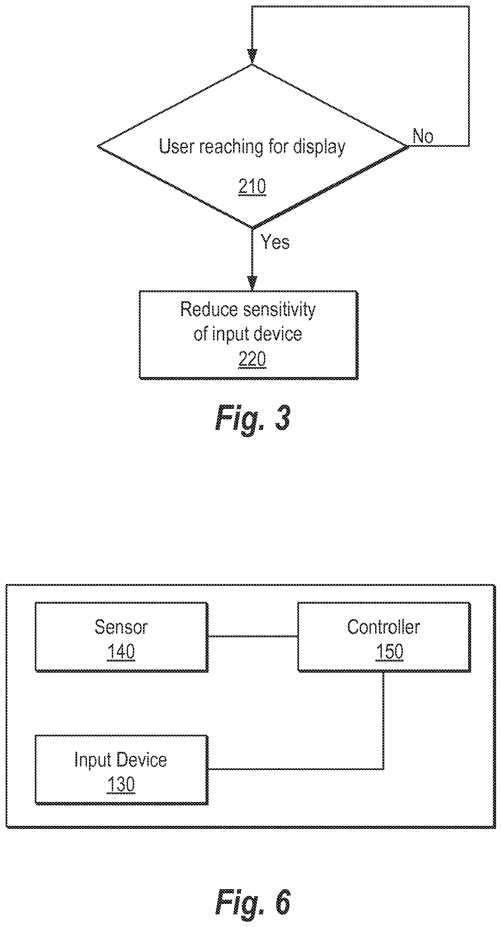

A controller (not shown in Figures 1 or 2) adjusts the sensitivity of the input device 130 in response to the sensor detecting an object close to the display member 110. Figure 3 shows an example method flow of the controller. At 210 the controller determines whether or not the sensor has detected a user reaching for the display.

For example the sensor 140 may detect an object close to the display member 110. For example, this detection may be based on an object entering a predefined volume of space in the vicinity of the display member. In one
example the sensor may detect an object approaching within a predetermined distance of the display member. In another example the sensor may detect when an object passes a particular line on the base of the computing device, or when an object passes a "virtual wall" which is discussed in more detail below.

In some examples the sensor may be able to detect when the object is a hand of the user, i.e. it may be able to distinguish a user's hand from other objects and thus in some examples the controller may be configured to reduce the sensitivity of the input device when the detected object is a user's hand. In some examples the sensor may be able to detect when a user's hand reaches for the display member, i.e. it may be able to detect a hand and reaching movement of the hand towards the display member. Thus in some examples the controller may be configured to reduce the sensitivity of the input device when the sensor detects a user's hand reaching for the display member. In other examples the controller may be simply to reduce the sensitivity of the input device in response to the sensor detecting any object close to the display member.

At 220 the controller adjusts the sensitivity of the input device 130 in response to the sensor detecting an object as described above. For example the controller may reduce the sensitivity of the input device 130, by turning off or inactivating the input device. This may, for example, be achieved by powering down the input device, preventing the input device from sending signals, instructing the CPU (Central Processing Unit) or OS (Operating System) of the computer device to ignore signals from the input device etc.

As mentioned above, the 'input device' is an input device on the base member 120 such as a keyboard, touchpad, trackball etc. If a plurality of input devices are on the base, then one, several, or all of the input devices may have their sensitivity reduced in response to the sensor detecting a user reaching for the display member (110).

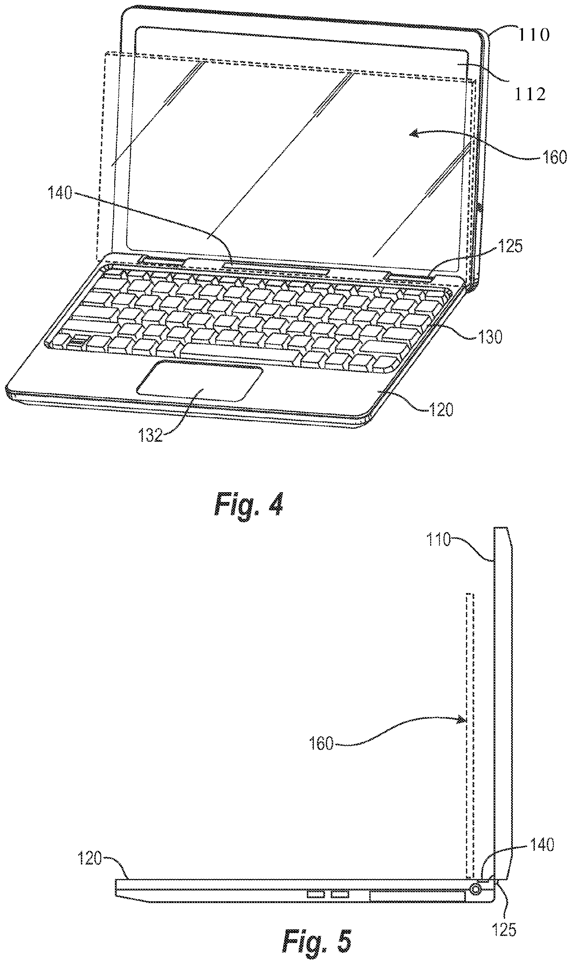

In one example, the sensor 140 may be configured to detect when an object passes a "virtual wall". Examples of a virtual wall 160 are shown in Figures 4 and 5. Figure 4 is a perspective view similar to Figures 1 and 2,
while Figure 5 is a side view. The virtual wall 160 is not a physical wall, but rather a notional plane configured in the sensor or computing device software or firmware so that it can be determined when a sensed body part passes the wall. For example the virtual wall 160 may extend upwardly from the base 120 of the computer device. In some examples the virtual wall 160 may be implemented in software or firmware running on the computing device and/or integrated into the sensor or controller.

In one example the sensor 140 is a 3D motion sensor which is able to detect and track 3D motion of an object, such as a hand or a user. For example, together with the controller or other processor, the 3D motion sensor may be able to determine the position of an external object in 3 dimensions. In one example the motion sensor may comprise a camera and an infrared light source, such as an infrared LED. In some examples there may be two video cameras and a plurality of infrared light sources. The infrared light source may project light onto the external object, e.g. a hand of the user, and the video camera may detect visible ambient light and/or infrared light reflected from the object. This information may be sent to a processor which builds a model to track the position and motion of the object based on this information. Hewlett-Packard's "Leap Motion" technology is one example of a 3D motion sensor. It is convenient to mount the 3D motion sensor on the base of the computing device, for reasons of space, but it would also be possible to mount it elsewhere, such as on the display member. In either case, the 3D motion sensor can detect an object approaching close to the display member by tracking movement of the object in three dimensions.

Figure 6 is a schematic diagram showing parts of the computer device. The computer device includes an input device 130, a sensor 140 and a controller 150. The controller 150 is in communication with the sensor 140 and the input device 130. The controller may for example be a Central Processing Unit (CPU) of the computing device, a separate dedicated processor, a processor integrated with the sensor or a combination of the aforementioned. The controller 150 receives input from the sensor 140 and implements the method illustrated in Figure 3. In some examples the controller may analyze data received from the sensor in order to determine if an object approaches close to the display member.

All of the features disclosed in this specification (including any accompanying claims, abstract and drawings), and/or all of the steps of any method or process so disclosed, may be combined in any combination, except combinations where at least some of such features and/or steps are mutually exclusive.

## Claims

1. A computing device (100) comprising:
a base member (120) including an input device (130, 132);
a display member (110) rotatably attached to the base member (120), the display member (110) including a touch sensitive screen (112);
a sensor (140) attached to the base member (120); and
a controller (150); **characterized in that**
the controller is configured to reduce input sensitivity of the input device (130, 132) in response to the sensor (140) detecting a user's hand close to the display member (110) so that the user can rest his arm or wrist on the input device while interacting with the touch sensitive screen (112) without accidentally inputting signals to the computing device (100).

2. The computing device (100) of claim 1 wherein the controller (150) is configured to reduce input sensitivity of the input device (130, 132) in response to the sensor (140) detecting the user's hand reaching for the display member (110).

3. The computing device (100) of claim 1 wherein the controller (150) is configured to detect when the user's hand passes a virtual wall between the input device (130, 132) and the display member (110), the virtual wall being a notional plane extending upwardly from the base member (120).

4. The computing device (100) of claim 1 wherein the input device (130, 132) is a keyboard (130).

5. The computing device (100) of claim 1 wherein the sensor (140) is an optical sensor.

6. The computing device (100) of claim 1 wherein the controller (150) is configured to reduce input sensitivity by turning off the input device (130, 132) or causing the computing device (100) to ignore signals from the input device (130, 132) .

7. The computing device (100) of any of the preceding claims, wherein:
the input device (130, 132) comprises a keyboard (130),
the touch sensitive screen (112) is connected to the keyboard (130), the sensor (140) is an optical sensor which is configured to detect when the user's hand comes within a predetermined distance of the touch sensitive screen (112), and
the controller (150) is configured to inactivate the keyboard (130) in response to the sensor (140) detecting that the user's hand is within the predetermined distance of the touch sensitive screen (112).

8. The computing device (100) of claim 7 wherein the optical sensor (140) comprises two cameras arranged to track movement of the user's hand in three dimensions.

9. The computing device (100) of claim 7 wherein the touch sensitive screen (112) is connected to the base member (120) and is capable of adopting a position in which the touch sensitive screen (112) extends upwardly relative to the base member (120); wherein the sensor (140) is on the base member (120) and is configured to detect the user's hand moving over the base member (120) towards the touch sensitive screen (112).

10. The computing device (100) of claim 7 wherein the controller (150) is configured to turn off the keyboard (130) in response to the sensor (140) detecting that the user's hand is within the predetermined distance of the touch sensitive screen (112).

11. A laptop computer comprising the computing device (100) according to any of the preceding claims, wherein:
the input device (130, 132) comprises a keyboard (130);
the base member (120) includes the keyboard (130) and the sensor (140);
the sensor (140) is configured to detect when the user's hand passes a virtual wall separating the keyboard (130) from the display member (110), the virtual wall being a notional plane extending upwardly from the base member (120); and
the controller (150) is configured to inactivate the keyboard (130) in response to detecting
that the user's hand has passed through the virtual wall separating the keyboard from the display member (110).

12. The laptop computer of claim 11 wherein the sensor (140) is an optical sensor and is located in the base member (120) at a location between the keyboard (130) and a junction of the base member (120) and the display member (110).

13. The laptop computer of claim 11 wherein the sensor (140) is a 3D motion tracker.

14. The laptop computer of claim 11 wherein the 3D motion tracker comprises an infrared light emitting diode, LED, and a video camera configured to detect the user's hand, and an infrared light from the LED reflected off the user's hand.

## Patentansprüche

1. Rechenvorrichtung (100), Folgendes umfassend:
ein Basiselement (120) einschließlich einer Eingabevorrichtung (130, 132);
ein Anzeigeelement (110), das drehbar an dem Basiselement (120) angebracht ist, wobei das Anzeigeelement (110) einen berührungsempfindlichen Bildschirm (112) umfasst;
einen Sensor (140), der an dem Basiselement (120) angebracht ist; und
einen Controller (150); **dadurch gekennzeichnet, dass**
der Controller konfiguriert ist, um die Eingabeempfindlichkeit der Eingabevorrichtung (130, 132) als Reaktion darauf zu reduzieren, dass der Sensor (140) die Hand eines Benutzers in der Nähe des Anzeigeelements (110) erfasst, sodass der Benutzer seinen Arm oder sein Handgelenk auf der Eingabevorrichtung auflegen kann, während er mit dem berührungsempfindlichen Bildschirm (112) interagiert, ohne versehentlich Signale in die Rechenvorrichtung (100) einzugeben.

2. Rechenvorrichtung (100) nach Anspruch 1, wobei der Controller (150) konfiguriert ist, um die Eingabeempfindlichkeit der Eingabevorrichtung (130, 132) als Reaktion darauf zu reduzieren, dass der Sensor (140) erfasst, dass die Hand des Benutzers nach dem Anzeigeelement (110) greift.

3. Rechenvorrichtung (100) nach Anspruch 1, wobei der Controller (150) konfiguriert ist, um zu erfassen, wenn die Hand des Benutzers eine virtuelle Wand zwischen der Eingabevorrichtung (130, 132) und dem Anzeigeelement (110) passiert, wobei die virtuelle Wand eine fiktive Ebene ist, die sich von dem Basiselement (120) nach oben erstreckt.

4. Rechenvorrichtung (100) nach Anspruch 1, wobei die Eingabevorrichtung (130, 132) eine Tastatur (130) ist.

5. Rechenvorrichtung (100) nach Anspruch 1, wobei der Sensor (140) ein optischer Sensor ist.

6. Rechenvorrichtung (100) nach Anspruch 1, wobei der Controller (150) konfiguriert ist, um die Eingabeempfindlichkeit zu reduzieren, indem er die Eingabevorrichtung (130, 132) ausschaltet oder die Rechenvorrichtung (100) veranlasst, Signale von der Eingabevorrichtung (130, 132) zu ignorieren.

7. Rechenvorrichtung (100) nach einem der vorhergehenden Ansprüche, wobei:
die Eingabevorrichtung (130, 132) eine Tastatur (130) umfasst,
der berührungsempfindliche Bildschirm (112) mit der Tastatur (130) verbunden ist,
der Sensor (140) ein optischer Sensor ist, der konfiguriert ist, um zu erfassen, wenn die Hand des Benutzers innerhalb eines vorbestimmten Abstands von dem berührungsempfindlichen Bildschirm (112) gelangt, und
der Controller (150) konfiguriert ist, um die Tastatur (130) als Reaktion darauf zu deaktivieren, dass der Sensor (140) erfasst, dass sich die Hand des Benutzers innerhalb des vorbestimmten Abstands von dem berührungsempfindlichen Bildschirm (112) befindet.

8. Rechenvorrichtung (100) nach Anspruch 7, wobei der optische Sensor (140) zwei Kameras umfasst, die angeordnet sind, um eine Bewegung der Hand des Benutzers in drei Dimensionen zu verfolgen.

9. Rechenvorrichtung (100) nach Anspruch 7, wobei der berührungsempfindliche Bildschirm (112) mit dem Basiselement (120) verbunden ist und fähig ist, eine Position anzunehmen, in der sich der berührungsempfindliche Bildschirm (112) bezüglich des Basiselements (120) nach oben erstreckt;
wobei der Sensor (140) auf dem Basiselement (120) ist und konfiguriert ist, um zu erfassen, dass sich die Hand des Benutzers über das Basiselement (120) zu dem berührungsempfindlichen Bildschirm (112) hin bewegt.

10. Rechenvorrichtung (100) nach Anspruch 7, wobei der Controller (150) konfiguriert ist, um die Tastatur (130) als Reaktion darauf auszuschalten, dass der Sensor (140) erfasst, dass sich die Hand des Benutzers innerhalb des vorbestimmten Abstands von dem berührungsempfindlichen Bildschirm (112) befindet.

11. Laptop-Computer, umfassend die Rechenvorrichtung (100) nach einem der vorhergehenden Ansprüche, wobei:
die Eingabevorrichtung (130, 132) eine Tastatur (130) umfasst;
das Basiselement (120) die Tastatur (130) und den Sensor (140) beinhaltet;
der Sensor (140) konfiguriert ist, um zu erfassen, wenn die Hand des Benutzers eine virtuelle Wand passiert, die die Tastatur (130) von dem Anzeigeelement (110) trennt, wobei die virtuelle Wand eine fiktive Ebene ist, die sich von dem Basiselement (120) nach oben erstreckt; und der Controller (150) konfiguriert ist, um die Tastatur (130) als Reaktion darauf zu deaktivieren, dass die Hand des Benutzers die virtuelle Wand passiert ist, die die Tastatur von dem Anzeigeelement (110) trennt.

12. Laptop-Computer nach Anspruch 11, wobei der Sensor (140) ein optischer Sensor ist und in dem Basiselement (120) an einer Stelle zwischen der Tastatur (130) und einer Verbindung des Basiselements (120) und des Anzeigeelements (110) gelegen ist.

13. Laptop-Computer nach Anspruch 11, wobei der Sensor (140) ein 3D-Bewegungsverfolger ist.

14. Laptop-Computer nach Anspruch 11, wobei der 3D-Bewegungsverfolger eine Infrarotlicht emittierende Diode, LED, und eine Videokamera umfasst, die konfiguriert ist, um die Hand des Benutzers und ein Infrarotlicht von der LED, das von der Hand des Benutzers reflektiert wird, zu erfassen.

## Revendications

1. Dispositif informatique (100) comprenant :
un élément de base (120) comportant un dispositif d'entrée (130, 132) ;
un élément d'affichage (110) fixé de manière rotative à l'élément de base (120), l'élément d'affichage (110) comportant un écran tactile (112) ;
un capteur (140) fixé à l'élément de base (120) ; et
un dispositif de commande (150) ; **caractérisé en ce que**
le dispositif de commande est configuré pour réduire la sensibilité d'entrée du dispositif d'entrée (130, 132) en réponse au capteur (140) détectant la main d'un utilisateur près de l'élément d'affichage (110) de sorte que l'utilisateur peut reposer son bras ou son poignet sur le dispositif d'entrée tout en interagissant avec l'écran tactile (112) sans entrer accidentellement des signaux dans le dispositif informatique (100).

2. Dispositif informatique (100) selon la revendication 1, dans lequel le dispositif de commande (150) est configuré pour réduire la sensibilité d'entrée du dispositif d'entrée (130, 132) en réponse au capteur (140) détectant la main de l'utilisateur atteignant l'élément d'affichage (110).

3. Dispositif informatique (100) selon la revendication 1, dans lequel le dispositif de commande (150) est configuré pour détecter lorsque la main de l'utilisateur traverse une paroi virtuelle entre le dispositif d'entrée (130, 132) et l'élément d'affichage (110), la paroi virtuelle étant un plan conceptuel s'étendant vers le haut à partir de l'élément de base (120).

4. Dispositif informatique (100) selon la revendication 1, dans lequel le dispositif d'entrée (130, 132) est un clavier (130).

5. Dispositif informatique (100) selon la revendication 1, dans lequel le capteur (140) est un capteur optique.

6. Dispositif informatique (100) selon la revendication 1, dans lequel le dispositif de commande (150) est configuré pour réduire la sensibilité d'entrée en mettant le dispositif d'entrée (130, 132) hors tension ou en amenant le dispositif informatique (100) à ignorer des signaux à partir du dispositif d'entrée (130, 132).

7. Dispositif informatique (100) selon l'une quelconque des revendications précédentes, dans lequel :
le dispositif d'entrée (130, 132) comprend un clavier (130),
l'écran tactile (112) est connecté au clavier (130),
le capteur (140) est un capteur optique qui est configuré pour détecter lorsque la main de l'utilisateur se trouve à une distance prédéterminée de l'écran tactile (112), et
le dispositif de commande (150) est configuré pour mettre le clavier (130) hors tension en réponse au capteur (140) détectant que la main de l'utilisateur se trouve à la distance prédéterminée de l'écran tactile (112).

8. Dispositif informatique (100) selon la revendication 7, dans lequel le capteur optique (140) comprend deux caméras agencées pour suivre le mouvement de la main de l'utilisateur en trois dimensions.

9. Dispositif informatique (100) selon la revendication 7, dans lequel l'écran tactile (112) est connecté à l'élément de base (120) et est capable d'adopter une position dans laquelle l'écran tactile (112) s'étend vers le haut par rapport à l'élément de base (120) ;
le capteur (140) étant sur l'élément de base (120) et étant configuré pour détecter la main de l'utilisateur se déplaçant sur l'élément de base (120) vers l'écran tactile (112).

10. Dispositif informatique (100) selon la revendication 7, dans lequel le dispositif de commande (150) est configuré pour désactiver le clavier (130) en réponse au capteur (140) détectant que la main de l'utilisateur se trouve à la distance prédéterminée de l'écran tactile (112).

11. Ordinateur portable comprenant le dispositif informatique (100) selon l'une quelconque des revendications précédentes, dans lequel :
le dispositif d'entrée (130, 132) comprend un clavier (130) ;
l'élément de base (120) comporte le clavier (130) et le capteur (140) ;
le capteur (140) est configuré pour détecter lorsque la main de l'utilisateur traverse une paroi virtuelle séparant le clavier (130) de l'élément d'affichage (110), la paroi virtuelle étant un plan conceptuel s'étendant vers le haut à partir de l'élément de base (120) ; et
le dispositif de commande (150) est configuré pour désactiver le clavier (130) en réponse à la détection que la main de l'utilisateur est passée à travers la paroi virtuelle séparant le clavier de l'élément d'affichage (110).

12. Ordinateur portable selon la revendication 11, dans lequel le capteur (140) est un capteur optique et est situé dans l'élément de base (120) à un emplacement entre le clavier (130) et une jonction de l'élément de base (120) et de l'élément d'affichage (110).

13. Ordinateur portable selon la revendication 11, dans lequel le capteur (140) est un détecteur de mouvement 3D.

14. Ordinateur portable selon la revendication 11, dans lequel le détecteur de mouvement 3D comprend une diode électroluminescente, LED, à infrarouge et une caméra vidéo configurée pour détecter la main de l'utilisateur, et une lumière infrarouge à partir de la LED réfléchie par la main de l'utilisateur.
